# EUROPEAN PATENT APPLICATION

(11) **EP 2 107 570 A1**
(43) Date of publication of application: **07.10.2009**
(21) Application number: 08253811.7
(22) Date of filing: 26.11.2008
(51) Int. Cl.: G11B 33/14

(54) **Scheme to protect media and head against corrosion/oxidation in a hard disk drive**

(30) Priority: 31.03.2008 US 80173
(71) Applicant: Hitachi Global Storage Technologies Netherlands B.V., 1070 AE Amsterdam (NL)
(72) Inventor: Dai, Qing, San Jose, CA 95125 (US); Marchon, Bruno, Palo Alto, CA 94303 (US)
(74) Representative: Calderbank, Thomas Roger

(57) **Abstract**

Oxygen scavenger for use in a hard disk drive. The oxygen scavenger removes oxygen from an interior of a hard disk drive to prevent corrosion of corrodible materials in magnetic media or magnetic heads. The oxygen scavenger is incorporated into a film so that it uses a limited physical space within an interior of the hard disk drive. The hard disk drive is either permeable to the outside environment or sealed so that gases from the outside environment are unable to enter the interior of the hard disk drive.

## Description

Hard disk drives and their components are made with metallic materials such as cobalt and iron that are susceptible to corrosion. Corrosion of the head and media is a particular challenge in disk drive technology. Recently, perpendicular recording technology has been implemented, causing even greater corrosion concerns. In addition, the push to higher areal density necessitates reducing the overcoat thickness on both heads and media, leaving them more prone to corrosion. Even if a media or a head has adequate overcoat coverage in its early life, slow wear during head/disk contacts over a lifetime of operation can trigger overcoat removal from portions of the head or media. This removal of the overcoat can lead to corrosion and failure of the hard disk drive.

Several schemes to prevent drive corrosions have been proposed. United States Patent No. 6,762,909 discusses completely sealing a drive in an inert atmosphere to prevent oxygen and water from entering the hard disk drive and thus corroding the heads and disks. However, given that the nanometer scale of a head sensor, it is possible that residual oxygen in the drive, even in the parts per billion range, can significantly alter the performance of the read head by corroding its surface by as little as a few atomic layers.

United States Patent No. 6,643,093 discusses incorporating a vapor corrosion inhibitor (VCI) inside of a hard disk drive. This technology could help reduce corrosion, but it might cause side effects in the overall reliability of the head and disk interface.

United States Patent No. 6,407,880 discusses keeping a heating element near the head sensor of a hard disk drive to prevent water condensation on the head. This method would not prevent dry oxidation of the metals, nor does it protect the drive during storage and shipping.

What is needed is a method and apparatus to prevent oxygen from causing corrosion in a hard disk drive and its components. Further, a method of preventing residual oxygen from remaining in a hard disk drive is also needed.

The present invention involves the use of an oxygen scavenger inside a sealed hard disk drive assembly or a non-sealed hard disk drive assembly. Oxygen scavengers can be used in several technological applications such as boilers, or the bottling of beer and olive oil.

One oxygen scavenger is a polymer material blended with a cobalt salt. This blend of material is an effective oxygen scavenger. As an oxygen scavenger, the polymer material blended with the cobalt salt can be used to eliminate oxygen inside a hard disk drive, or to reduce the oxygen partial pressure significantly if the drive is not sealed. Eliminating or reducing the oxygen supply eliminates a driving force for corrosion and oxidation of hard disk drives and its components.

Incorporating an oxygen scavenger into a hard disk drive would not be detrimental to reliability of the head/disk interface. Such an oxygen scavenger can be produced as a thin film. Further, an oxygen scavenger would not require a power source, would take little physical space and would be relatively inexpensive to incorporate into a hard disk drive.

For a fuller understanding of the nature and advantages of this invention, as well as the preferred mode of use, reference should be made to the following detailed description read in conjunction with the accompanying drawing which is not to scale.

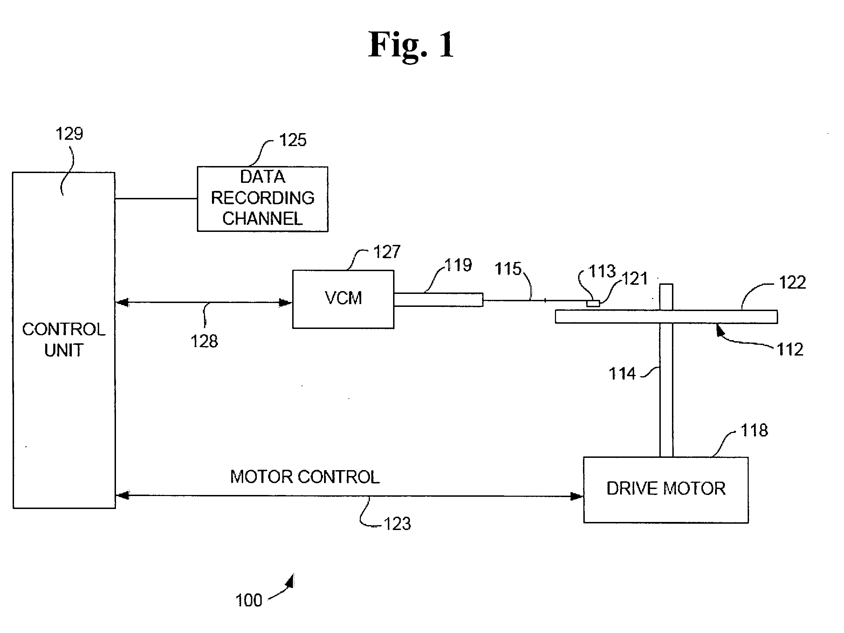

FIG. 1 is a functional schematic of an exemplary hard disk drive.

The following description is of the best embodiments presently contemplated for carrying out this invention. This description is made for the purpose of illustrating the general principles of this invention and is not meant to limit the inventive concepts claimed herein.

Referring now to FIG. 1, there is shown a disk drive 100 embodying this invention. As shown in FIG. 1, at least one rotatable magnetic disk 112 is supported on a spindle 114 and rotated by a disk drive motor 118. The magnetic recording on each disk is in the form of annular patterns of concentric data tracks (not shown) on the magnetic disk 112.

At least one slider 113 is positioned near the magnetic disk 112, each slider 113 supporting one or more magnetic head assemblies 121. As the magnetic disk rotates, slider 113 moves radially in and out over the disk surface 122 so that the magnetic head assembly 121 may access different tracks of the magnetic disk where desired data are written. Each slider 113 is attached to an actuator arm 119 by way of a suspension 115. The suspension 115 provides a slight spring force which biases slider 113 against the disk surface 122. Each actuator arm 119 is attached to an actuator means 127. The actuator means 127 as shown in FIG. 1 may be a voice coil motor (VCM). The VCM comprises a coil movable within a fixed magnetic field, the direction and speed of the coil movements being controlled by the motor current signals supplied by controller 129.

During operation of the disk storage system, the rotation of the magnetic disk 112 generates an air bearing between the slider 113 and the disk surface 122 which exerts an upward force or lift on the slider. The air bearing thus counter-balances the slight spring force of suspension 115 and supports slider 113 off and slightly above the disk surface by a small, substantially constant spacing during normal operation.

The various components of the disk storage system are controlled in operation by control signals generated by control unit 129, such as access control signals and internal clock signals. Typically, the control unit 129 comprises logic control circuits, storage means and a microprocessor. The control unit 129 generates control signals to control various system operations such as drive motor control signals on line 123 and head position and seek control signals on line 128. The control signals on line 128 provide the desired current profiles to optimally move and position slider 113 to the desired data track on disk 112. Write and read signals are communicated to and from write and read heads 121 by way of recording channel 125.

The hard disk drive may be unsealed or sealed. An unsealed drive allows air to pass between the outside environment and the drive. In the alternative, the disk drive may be sealed from the outside environment so that no air or other particle from the outside environment is able to enter the hard disk drive. Oxygen scavengers are particularly useful in sealed drives because the inside of the disk drive is only exposed to a limited amount of oxygen. Thus, in a sealed drive, it is unlikely that the oxygen scavenger will be used in its entirety and leave the drive vulnerable to future oxygen contamination and corrosion. Sealed hard disk drives typically have an airtight top cover, an airtight bottom cover and an airtight seal to prevent air from passing into and out of the interior of the hard disk drive. The seal is either a physical devise such as a rubber o-ring or a non-physical seal such as a laser welding of the top and bottom covers.

To absorb oxygen in the disk drive, any or a multiple of oxygen scavengers may be used. The oxygen scavengers could be placed into a packet which is inserted into a disk drive during the manufacturing process. These packets would not be unlike the packets used for food products such as beef jerky. These packets generally include an outside with a porous membrane encapsulating some form of oxygen scavenger. In addition, the scavenger may be put into a film, a desiccant pack or a recirculation filter.

The oxygen scavengers used in the disk drive can be inorganic or organic. Inorganic oxygen scavengers are usually composed of a finely dispersed powder of a reactive (electropositive) metal that does not self-passivate and reacts readily with oxygen to form an oxide. Such metals include cobalt, iron, manganese and molybdenum. If such a metal is used as an oxygen scavenger, the powder could be included in a pouch, or encapsulated into an oxygen-porous polymer. An example of an inorganic scavenger is found in United States Patent No. 7,049,359.

On the other hand, organic oxygen scavengers such as those that are polymer-based can be used for hard drive applications. These organic oxygen scavengers are also made of compounds that can readily react with oxygen, and are often associated with a catalysts that speeds up the reaction rate for room temperature applications. Some examples of organic oxygen scavengers are found in United States Patent Nos. 5,776,361, 5,211,875, 5,310,497, 6,558,762 and 5,167,835. Oxygen scavengers include hydrazine compounds as well as hydroquinones and carbohydrizide. Inorganic oxygen scavengers are generally more useful than organic scavengers because organic scavengers are often toxic.

One possible embodiment for an oxygen scavenger in a hard disk drive is a polymer impregnated with a cobalt salt. The cobalt salt is a catalyst that greatly enhances the reaction and fixing of oxygen onto the polymer. This polymer impregnated with the cobalt salt could be made as a film and be placed inside the drive. For instance, the film could be placed on the inside of the top cover, the bottom cover or any other surface of the inside of the hard disk drive. Further, multiple oxygen scavenging films may be placed into the hard disk drive. Since these films can be as thin as 1/20, 1/50, 1/200, 1/500 and even 1/1000 of an inch, they do not take up much space inside the disk drive. Other possible embodiments for placing an oxygen scavenger in a disk drive would be to incorporate the material into a desiccant assembly, an activated carbon assembly or a recirculation filter of the hard disk drive.

Oxygen scavengers generally can be found commercially including in the following forms, in a PET (polyethylene terephthalate) masterbatch, in a PET resin, in a polyamide blend for use as the barrier layer in multilayer bottles, in a polyamide layer and in an MXD6-Nylon film.

While various embodiments have been described above, it should be understood that they have been presented by way of example only, and not limitation. Other embodiments falling within the scope of the invention may also become apparent to those skilled in the art. Thus, the breadth and scope of the invention should not be limited by any of the above-described exemplary embodiments, but should be defined only in accordance with the following claims and their equivalents.

## Claims

1. A hard disk drive including:
a cover;
a hard disk including at least one corrodible metal; and
a film including an oxygen scavenger, wherein the film is the interior of the hard disk drive.

2. A hard disk drive including:
a cover;
a magnetic head including at least one corrodible metal; and
a film including an oxygen scavenger, wherein the film is the interior of the hard disk drive.

3. The hard disk drive of claim 1 or claim 2 , wherein the film is attached to the cover.

4. The hard disk drive of claim 3, wherein the cover includes an airtight top cover and an airtight bottom cover and the film is attached to the top cover and wherein there is an airtight seal between the top cover and the bottom cover.

5. The hard disk drive of claim 3, wherein the cover includes a top cover and a bottom cover and the film is attached to the bottom cover and wherein there is an airtight seal between the top cover and the bottom cover.

6. The hard disk drive of claim 1 or claim 2, wherein the oxygen scavenger includes a cobalt salt.

7. The hard disk drive of claim 1 or claim 2, wherein the film has a thickness of less than 1/50 of an inch.

8. The hard disk drive of claim 7, wherein the film has a thickness of less than 1/200 of an inch.

9. The hard disk drive of claim 8, wherein the film has a thickness of less than 1/500 of and inch.

10. The hard disk drive of claim 9, wherein the film has a thickness of less than 1/1000 of an inch.

11. The hard disk drive of claim 1 or claim 2, wherein the film includes PET.

12. The hard disk drive of claim 1 or claim 2, wherein the film includes nylon.

13. The hard disk drive of claim 1 or claim 2, wherein the film includes MXD-nylon.

14. A hard disk drive including:
a cover;
a hard disk including at least one corrodible metal; and
a packaging including an oxygen scavenger, wherein the packaging is the interior of the hard disk drive.
